# EUROPÄISCHE PATENTSCHRIFT

(11) **EP 3 853 974 B1**
(45) Veröffentlichungstag und Bekanntmachung des Hinweises auf die Patenterteilung: **22.10.2025**
(21) Anmeldenummer: 19773405.6
(22) Anmeldetag: 19.09.2019
(51) Int. Cl.: B22C 3/00, B22C 9/06, B22C 9/22, H01F 41/04, H02K 15/043, H02K 3/18

(54) **GIESSFORM ZUR HERSTELLUNG VON WENDELFÖRMIGEN GUSSKÖRPERN**
CASTING MOULD FOR PRODUCING HELICAL CAST BODIES
MOULE POUR LA FABRICATION DE CORPS MOULÉS HÉLICOÏDAUX

(30) Priorität: 19.09.2018 DE 102018215955
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: BUSSE, Matthias, 28359 Bremen (DE); WÖSTMANN, Franz-Josef, 28359 Bremen (DE)
(74) Vertreter: Pfenning, Meinig & Partner mbB
(86) Internationale Anmeldenummer: PCT/EP2019/075191
(87) Internationale Veröffentlichungsnummer: WO 2020/058412

(56) Entgegenhaltungen:
- EP-A1- 3 208 013
- EP-A2- 2 688 183
- DE-A1- 102014 106 851
- JP-A- 2015 009 259

## Beschreibung

Die Erfindung liegt auf dem Gebiet der Gießereitechnik und ist mit besonderem Vorteil bei der Herstellung von Spiralen, Federn oder Spulen aus einem Metall, insbesondere Kupfer, einsetzbar.

Bei elektrischen Maschinen kommen gewickelte Spulen zum Einsatz. Die Spulen füllen den zur Verfügung stehenden Bauraum nicht ideal aus. Daraus resultiert eine geringere Leistungs- bzw. Drehmomentdichte der elektrischen Maschinen bezogen auf das Gewicht oder den Bauraum. Gegossene Cu-Spulen können diesen Nachteil ausgleichen, jedoch sind bisher keine serientauglichen Verfahren zur Herstellung von gegossenen Cu-Spulen oder gegossenen Spulen aus Cu-Legierungen in Dauerformen mit ausreichenden Standzeiten bekannt.

Zur Steigerung der Leistungsdichte oder der Drehmomentdichte elektrischer Maschinen werden bisher aufwändige, oftmals manuell hergestellte Spulen gewickelt, um den Füllgrad noch geringfügig gegenüber Serienverfahren zu verbessern. Über der Höhe der Wicklungen wird dabei Draht mit gleichem Querschnitt verwendet. Weiterhin verschlechtern bei konventionellen elektrischen Maschinen die von innen nach außen aufeinanderliegenden Windungen der Spule die Wärmeabfuhr und führen zu stärkerer Erwärmung der Spulen und damit zu einer notwendigen Begrenzung der maximalen Stromdichte bezogen auf den Querschnitt der Wicklung.

Gegossene Cu-Spulen oder gegossene Spulen aus Cu-Legierungen sind grundsätzlich bekannt, werden jedoch bisher nicht in Dauerformen, sondern in verlorenen Form wie z.B. im Feinguss oder im Lost Foam-Verfahren hergestellt.

Die Druckschrift EP 3 208 013 A1 betrifft ein Verfahren zum Gießen eines Bauteils komplexer Geometrie, bei dem eine Gießform eingesetzt wird, von der wenigstens ein Formteil als verlorene Form ausgebildet ist. Das wenigstens eine als verlorene Form ausgebildete Formteil wird dabei aus einem Salz oder einer Salzmischung hergestellt. Wenigstens ein äußerer oder innerer Teil der Gießform, durch den die äußere bzw. innere Geometrie des Bauteils festgelegt wird, wird bei dem Verfahren aus mehr als zwei Formsegmenten zusammengesetzt, die vorzugsweise übereinander gestapelt werden.

Die Druckschrift DE 10 2014 106851 A1 offenbart ein Spulenpaket für eine elektrische Maschine, mit einem Spulenträger aus einem elektrisch nicht leitfähigen Werkstoff und mit einer vom Spulenträger aufgenommenen Spule aus einem elektrisch leitfähigen Werkstoff, wobei der Spulenträger aus einem keramischen Werkstoff gefertigt ist, und wobei die Spule als Spulenguss ausgebildet ist.

Der Erfindung liegt vor dem Hintergrund des Standes der Technik die Aufgabe zugrunde, eine Möglichkeit zur Herstellung von gegossenen Metallspulen mit vielfach verwendbaren Werkzeugen zu schaffen.

Die Aufgabe wird durch eine Gießform gemäß Anspruch 1 gelöst. Vorteilhafte Ausführungsformen ergeben sich aus den abhängigen Ansprüchen und aus der Beschreibung.

Die Erfindung bezieht sich auf eine Gießform zur Herstellung von wendelförmigen Gusskörpern, gemäß Anspruch 1.

Die Matrize kann dabei bezüglich ihrer inneren Form, d. h. ihres hohlen Innenraums, der die Außenform der Spule festlegt, konisch oder pyramidenstumpfartig ausgebildet sein, so dass der Gusskörper eine konische oder pyramidenstumpfartige Außenkontur erhält. Der Formkern kann in seiner Kontur im Wesentlichen, das heißt beispielsweise bis auf eine Entformschräge, zylindrisch oder auch konisch oder pyramidenstumpfartig ausgebildet sein. Wird die Spule auf einen Zahn eines Motorblechs aufgesteckt, so kann dieser gerade Konturen aufweisen, so dass auch eine Innenkontur der Spule, die zylindrisch oder quaderförmig ist, sinnvoll ist. Entsprechend kann für diesen Fall auch die Außenkontur des Formkerns eine Zylinder- oder Quaderform aufweisen oder auch die Form eines Kegels oder einer vierseitigen Pyramide bzw. eines Stumpfes eines Kegels oder einer Pyramide.

Die Wandstärke des Spulenkörpers kann bei konischer oder pyramidenförmiger Außenkontur zum radial in einer elektrischen Maschine außen liegenden Ende der Spule hin zunehmen. Entsprechend kann die Höhe der einzelnen Windungen, in Längsrichtung der Spule gemessen, entlang der Spule zum dickeren Ende der Spule, das heißt zu deren Ende mit einem größeren Außendurchmesser, abnehmen, insbesondere bei gleichbleibendem Gesamtquerschnitt jeder einzelnen Windung.

Vorteilhaft kann dabei vorgesehen sein, dass der Kernzug einen oder mehrere Stege aufweist, die die Wendel definieren und verschiedene, einander benachbarte Windungen der Wendel des Gusskörpers voneinander trennen.

Die Geometrie der Stege am Kernzug und/oder auch an der Matrize kann so gestaltet sein, dass die Steigung und/oder die Windungsstärke des wendelförmigen Körpers über dessen Länge konstant oder auch veränderlich ist, das heißt beispielsweise zu einem Ende hin zu- oder abnimmt.

Es kann dabei ein durchgehend wendelförmiger Steg auf der Oberfläche des Kernzugs vorgesehen sein, der die Negativ-Form der Wendel sowie die einander zugewandten Grenzflächen der einzelnen Wendelgänge definiert. Der Steg ist beim Gießvorgang zwischen den einzelnen Wendelgängen des Gusskörpers angeordnet.

Weiter kann vorteilhaft vorgesehen sein, dass der Kernzug beim Entformen in wenigstens einer oder zwei Richtungen einfällt.

Dazu kann vorgesehen sein, dass der Kernzug aus zwei oder drei oder mehr als drei Teilkörpern besteht, die beispielsweise prismenförmig oder keilförmig ausgebildet sind, von denen wenigstens zwei, drei oder mehr als drei jeweils einen Teil der Oberfläche des Kernzugs ausbilden, die an den wendelförmigen Körper angrenzt.

Die Teilkörper können beispielsweise jeweils im Querschnitt kreisringsegmentförmig ausgebildet sein.

Mehrere Teilkörper können dabei gemeinsam einen hohlen, insbesondere hohlzylindrischen, Körper bilden, wobei wenigstens einer der Teilkörper radial nach innen verschoben werden oder einfallen kann. Es kann auch vorgesehen sein, dass wenigstens einer der Teilkörper des Kernzugs aus einem Material besteht, das auflösbar ist, wie beispielsweise ein in Wasser auflösbarer Salzkörper oder ein zerstoßbarer Sandformkörper. Dieser auflösbare Teilkörper kann die übrigen, wenigstens teilweise nicht auflösbaren und wiederverwendbaren Teilkörper während des Gießvorgangs stützen.

Erfindungsgemäß weist der Kern wenigstens einen auflösbaren oder zerstörbaren Teilkörper und wenigstens einen nicht auflösbaren, als Dauerform verwendbaren Teilkörper auf, wobei nur die als Dauerform verwendbaren Teilkörper mit dem Gusswerkstoff oder der Schmelze in Kontakt kommen.

Weiter kann vorteilhaft vorgesehen sein, dass der Kernzug beim Entformen rotiert und damit das Entformen aus der Wendel unterstützt.

Weiter kann vorteilhaft vorgesehen sein, dass der Kernzug aus einem Keramikmaterial, insbesondere einem Formsandmaterial besteht, das nach einem Gießvorgang aufgelöst werden kann.

Die Matrize, die eine konische oder viereckig pyramidenförmige Innenkontur aufweisen kann, kann über die Länge der in ihr zu gießenden Spule eine gleichbleibende Wandstärke aufweisen. In diesem Fall verläuft die Außenkontur parallel zur Innenkontur. Hierdurch, also durch konstante Wandstärke der Matrize als Werkzeugeinsatz, wird bei schnellen Temperaturänderungen eine ungleichmäßige Erwärmung oder Abkühlung der Matrize vermieden.

Die Matrize wird als Werkzeugeinsatz vorteilhaft in eine Stahlform eingesetzt.

Diese kann eine konisch oder pyramidenförmig sich verjüngende Innenkontur aufweisen, so dass mehrere Teile einer potenziell mehrteiligen Matrize beim Einsetzen in die Stahlform auch bei thermischen Belastungen zuverlässig positioniert und komprimiert werden.

Die Matrize nimmt den Gießwerkstoff, beispielsweise Kupfer, vollständig auf, so dass der Gießwerkstoff mit der Stahlform nicht in Berührung kommt, sondern insbesondere ausschließlich mit Keramikoberflächen von Matrize und Formkern. Dadurch werden thermische Schädigungen der Stahlform beim Gießen von Cu-Spulen vermieden.

Weiter kann vorteilhaft vorgesehen sein, dass die Matrize einen oder mehrere Stege aufweist, die die Wendel definieren und verschiedene, einander benachbarte Windungen der Wendel des Gusskörpers voneinander trennen.

Es kann dabei ein durchgehend wendelförmiger Steg auf der Oberfläche der Matrize vorgesehen sein, der die Negativ-Form der Wendel sowie die einander zugewandten Grenzflächen der einzelnen Wendelgänge definiert. Der Steg ist beim Gießvorgang zwischen den einzelnen Wendelgängen des Gusskörpers angeordnet.

Die Wendel kann auch insgesamt durch einen Steg auf der Matrize und einen Steg auf dem Kernzug definiert sein, die während des Gießvorgangs aneinander anliegen.

Weiter kann vorteilhaft vorgesehen sein, dass die Matrize mehrteilig ausgebildet und dazu eingerichtet ist und dass nach jedem Gießvorgang zum Entformen mehrere Teile der Matrize voneinander entfernt werden.

Weiter kann vorteilhaft vorgesehen sein, dass die Matrize und/oder ein Formkern ganz oder teilweise aus Titannitrid, Titancarbonitrid, Siliziumcarbit, Siliziumnitrid oder Aluminiumoxid bestehen.

Generell sind insbesondere für die oben beschriebene Gießform Niederdruckguss und Druckguss als serientaugliche Gießverfahren denkbar. Jedoch gelten die Ausführungsformen der Erfindung auch für alle anderen Gießverfahren, bei denen Dauerformen zum Einsatz kommen.

Insbesondere können dabei folgende Aspekte vorteilhaft sein; die einzeln oder in Gruppen zutreffen können:
a) Formgebung durch Gießen, bei der die Hauptkontur der Spule in einer Dauerform erzeugt wird, die im Fertigungstakt geschlossen, gefüllt und zur Entnahme der erstarrten Spule bzw. Gießtraube mit Spulen geöffnet wird.
b) Die formgebende Kontur in der Dauerform kann als keramischer Formeinsatz innerhalb eines stützenden Stahlwerkzeuges ausgeführt sein.
c) Die Cu-Schmelze kommt im Werkzeug ausschließlich mit den keramischen Einsätzen oder keramischen Oberflächen in Berührung.
d) Die keramischen Einsatze bestehen ganz oder teilweise aus Titannitrid, Titancarbonitrid, Siliziumcarbit, Siliziumnitrid oder Aluminiumoxid oder ähnlichen keramischen Werkstoffen.
e) Die Innenkontur der Spule wird durch einen Permanentkern des Werkzeugs als Kernzug ausgeführt, der zur Entformung in einer oder zwei Richtungen einfällt, um die Hinterschneidungen an der Innenkontur der Spule entformen zu können. Werkstoffe des Permanentkernes können die unter d) aufgeführten Materialien sein. Vorteilhaft ist dabei die Vermeidung von verlorenen Kernen zur Optimierung von Zykluszeiten und Herstellungskosten.
f) Alternativ zu e) kann ein verlorener Kern zur Ausbildung der Spuleninnengeometrie eingesetzt werden, der aus Salz oder wasserlöslichem Kunststoff oder anderen Materialien besteht, so dass der Kern nach dem Gießprozess ausgespült/aufgelöst/zerstört werden kann.
g) In Verbindung mit einer vereinfachten Herstellungsart von Formen durch Einbringen von wendelförmigen Hohlräumen in einen bearbeitbaren Formkörper mittels eines rotierenden und gleichzeitig translatorisch bewegten Schneidwerkzeugs vereinfacht sich die Geometrie der keramischen Einsätze deutlich, so dass in der Regel auf den Einsatz verlorener Kerne verzichtet werden kann.
h) Die keramischen Formeinsätze können beispielsweise auch durch Gefriergelieren (gemäß EP1651404 B1) hergestellt werden.
i) Nach Erreichen der maximalen Standzeit oder bei Beschädigung der Formeinsätze werden diese mittels eines Schnellwechselsystems im Werkzeug ausgetauscht. Entsprechende Formeinsätze sind in ausreichender Stückzahl herzustellen und vorzuhalten und werden in kürzester Zeit gewechselt.
j) Alternativ werden die Formeinsätze durch additive Manufacturing schichtenweise aus einem keramischen Pulverbett hergestellt. Hierbei können konturnahe Kühlkanäle zur Taktzeitverkürzung und Gefügeverbesserung der Cu-Spulen in die Formeinsätze integriert werden.
k) Die keramischen Einsätze werden ausgehend von gängigen Strukturkeramiken wie Titannitrid, Titancarbonitrid, Siliziumcarbit, Siliziumnitrid oder Aluminiumoxid weiterentwickelt und in Bezug auf die Temperaturwechselbelastungen des Gießens angepasst und optimiert. I) Optimierungsgröße ist bei Materialentwicklungen des keramischen Formeinsatzes ein möglichst geringer thermischer Ausdehnungskoeffizient und eine gute Entformbarkeit der gegossenen Spulen.
m) Alternativ zu d) kann die formgebende Kontur auch als keramische Beschichtung oder als keramisch beschichteter Formeinsatz innerhalb einer stützenden Stahlwerkzeuges der Dauerform ausgeführt werden.

Durch die Erfindung wird es möglich, gegossene Spulen aus Cu oder Cu-Legierungen in Dauerformen herzustellen und damit die Produktivität im Serieneinsatz deutlich zu erhöhen. Gleichzeitig werden die Herstellkosten des Verfahrens gesenkt und die technologischen Vorteile der gegossenen Spulen für elektrische Maschinen nutzbar.

Die Erfindung wird im Folgenden beispielhaft in Figuren einer Zeichnung dargestellt und nachfolgend erläutert. Dabei zeigt
- Fig. 1: einen Querschnitt einer Spule auf einem Zahn/Pol eines Blechs eines elektrischen Motors und
- Fig. 2: im Querschnitt die Matrize und die Stahlform,
- Fig. 3: im Querschnitt die Matrize und einen Kernzug,
- Fig. 4: einen Teilkörper des Kernzugs, sowie
- Fig. 5: eine perspektivische Darstellung eines Kernzugs.

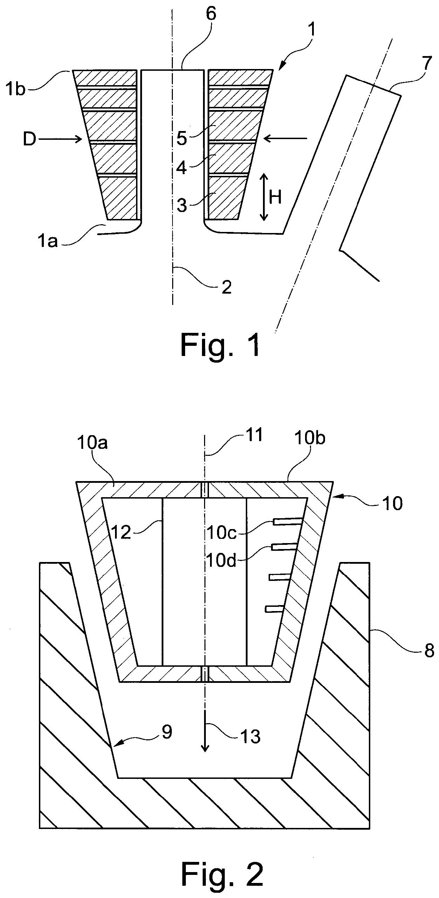

Figur 1 zeigt in einem Längsschnitt einen im Gießverfahren herzustellenden Gusskörper in Form einer elektrischen Spule 1 aus Kupfer, deren Längsachse mit 2 bezeichnet ist. Der Außendurchmesser D der Spule 1 nimmt von dem ersten Ende 1a, das im eingebauten Zustand in einer elektrischen Maschine einer Rotationsachse am nächsten ist, zu dem zweiten Ende 1b hin linear zu. Die Höhe H der einzelnen Windungen 3, 4, 5 nimmt zum zweiten Ende 1b hin ab. Der Innendurchmesser der Spule 1 ist über deren Länge konstant. Die Spule ist in Figur 1 in ihrer Position gezeigt, in der sie einen Zahn/Pol 6 eines Blechpakets einer elektrischen Maschine umgibt. Ein weiterer Pol ist mit 7 bezeichnet.

In Figur 2 ist eine Stahlform 8 dargestellt, deren Innenkontur 9 eine Matrize 10 in Form eines zweiteiligen konischen Keramikeinsatzes passgenau aufnimmt. Die Matrize ist entlang der Linie 11 in die beiden Teile 10a, 10b geteilt. Das Angusssystem ist der Übersichtlichkeit halber nicht dargestellt.

Innerhalb der Matrize 10 ist ein Formkern 12 dargestellt, der in dem Beispiel zylindrisch als Kernzug ausgebildet ist. An der Innenseite der Matrize 10 sind beispielhaft Stege 10c, 10d eingezeichnet, die beim Abguss die Zwischenräume zwischen einzelnen Windungen ganz oder teilweise erzeugen oder abbilden. Die Matrize wird beim Einfügen in das stützende Werkzeug in Form der Stahlform 8 in Richtung des Pfeils 13 radial komprimiert und dichtet entlang der Fuge 11. Der Metallgusswerkstoff, beispielsweise Kupfer, kommt dann ausschließlich mit der Matrize 10 und dem Formkern 12 in Kontakt, die beide aus Keramik bestehen oder mit einem Keramikmaterial beschichtet sein können.

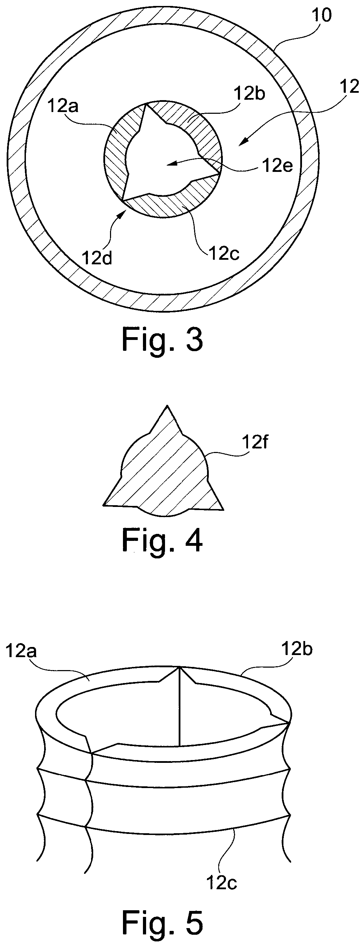

In der Figur 3 ist im Querschnitt die Matrize 10 sowie ein Kernzug 12 mit Teilkörpern 12a, 12b, 12c dargestellt, die gegeneinander beweglich sind und gemeinsam die umfangsseitige Oberfläche 12d des Kernzugs 12 bilden. Jeder der Teilkörper 12a, 12b, 12c bildet einen prismatischen Körper mit einer teilzylindrischen, gekrümmten Oberfläche. In möglichen Ausführungen können die Teilkörper 12a, 12b, 12c auch keilförmig ausgebildet sein. In den Bereichen, an denen die Teilkörper aneinander anliegen, ist ihre Wandstärke geringer als in den übrigen Bereichen, sodass zwischen den Teilkörpern 12a, 12b, 12c freie Zwickel gebildet werden, die ein radiales Einfallen des Kernzugs 12 ermöglichen.

Die Teilkörper 12a, 12b, 12c können während des Gießvorgangs in dem zwischen ihnen gebildeten, zentralen Hohlraum 12e durch einen Stützkörper 12f gestützt werden, der zum Einfallen des Kernzugs 12 entweder axial herausziehbar oder als auflösbarer Körper zerstörbar ausgebildet ist. Nach dem Entfernen des als Stützkörper 12f ausgebildeten Teilkörpers kann dann wenigstens einer der übrigen Teilkörper 12a, 12b, 12c in radialer Richtung einfallen.

Der Kernzug 12 kann beispielsweise auch an seinem zylindrischen Umfang umlaufende wendelförmige Stege aufweisen, die einzelne Windungen der zu gießenden Wendel voneinander trennen.

Figur 5 zeigt eine perspektivische Darstellung eines mehrteiligen Kernzugs ohne den Stützkörper.

## Patentansprüche

1. Gießform zur Herstellung von wendelförmigen Gusskörpern (1), insbesondere Spulen, Federn oder Spiralen, mit einer Matrize (10) in Form einer Dauerform, die die Außenkontur der wendelförmigen Körper festlegt und aus einem Keramikmaterial besteht oder mit einem Keramikmaterial beschichtet ist, mit einem stützenden Werkzeug (8), das die Matrize (10) von außen stützt, und mit einem Formkern, der die durchgehende Öffnung innerhalb des wendelförmigen Körpers (1) definiert, wobei der Formkern als Kernzug (12) ausgebildet ist, wobei der Formkern wenigstens einen auflösbaren oder zerstörbaren Teilkörper als Stützkörper (12f) und mehrere nicht auflösbare, als Dauerform verwendbare Teilkörper (12a, 12b, 12c) aufweist,
wobei die als Dauerform verwendbaren Teilkörper (12a, 12b, 12c) aus einem Keramikmaterial bestehen oder mit einem Keramikmaterial beschichtet sind,
wobei die Teilkörper (12a, 12b, 12c) während des Gießvorgangs in einem zwischen ihnen gebildeten zentralen Hohlraum (12e) durch den Stützkörper (12f) gestützt werden, wobei der Stützkörper (12f) zum Einfallen des Kernzugs (12) als auflösbarer Körper zerstörbar ausgebildet ist,
wobei der Formkern derart ausgeführt ist, dass von ihm nur die als Dauerform verwendbaren Teilkörper mit einem Gusswerkstoff oder einer Schmelze in Kontakt kommen.

2. Gießform nach Anspruch 1, **dadurch gekennzeichnet, dass** der Kernzug (12) einen oder mehrere Stege aufweist, die die Wendel definieren und verschiedene, einander benachbarte Windungen der Wendel des Gusskörpers voneinander trennen.

3. Gießform nach Anspruch 1 oder 2, **dadurch gekennzeichnet, dass** der Kernzug beim Entformen in wenigstens einer oder zwei Richtungen einfällt.

4. Gießform nach Anspruch 1 oder 2, **dadurch gekennzeichnet, dass** der Kernzug beim Entformen rotiert.

5. Gießform nach Anspruch 1 oder 2, **dadurch gekennzeichnet, dass** der Kernzug aus einem Keramikmaterial, insbesondere einem Formsandmaterial besteht, das nach einem Gießvorgang aufgelöst werden kann.

6. Gießform nach einem der Ansprüche 1 bis 5, **dadurch gekennzeichnet, dass** die Matrize (10) einen oder mehrere Stege (10c, 10d) aufweist, die die Wendel definieren und verschiedene, einander benachbarte Windungen (3, 4, 5) der Wendel des Gusskörpers (1) voneinander trennen.

7. Gießform nach Anspruch 6, **dadurch gekennzeichnet, dass** die Matrize (10) mehrteilig ausgebildet und dazu eingerichtet ist und dass nach jedem Gießvorgang zum Entformen mehrere Teile der Matrize voneinander entfernt werden.

8. Gießform nach einem der Ansprüche 1 bis 7, **dadurch gekennzeichnet, dass** die Matrize (10) und/oder ein Formkern (12) ganz oder teilweise aus Titannitrid, Titancarbonitrid, Siliziumcarbit, Siliziumnitrid oder Aluminiumoxid bestehen.

## Claims

1. A casting mold for producing helical cast bodies (1), in particular coils, springs or spirals, comprising a die (10) in the form of a permanent mold, which establishes the outer contour of the helical bodies and is made of a ceramic material, or is coated with a ceramic material, comprising a supporting tool (8), which supports the die (10) from the outside, and comprising a mold core, which defines the continuous opening inside the helical body (1),wherein mold core is designed as a core puller (12), wherein the mold core has at least one dissolvable or destructible sub-body as a support body (12f) and a plurality of non-dissolvable sub-bodies (12a, 12b, 12c) which can be used as a permanent mold,
wherein the sub-bodies (12a, 12b, 12c) which can be used as a permanent mold consist of a ceramic material or are coated with a ceramic material,
wherein during the casting process, the sub-bodies (12a, 12b, 12c) can be supported in a central cavity (12e) formed between them by the support body (12f), wherein the support body (12f)is designed as a dissolvable body so as to be destructible, for the core puller (12) to be moved,
wherein the mold core is designed in such a way that only the parts of it that can be used as a permanent mold come into contact with a casting material or a melt.

2. The casting mold according to claim 1, **characterized in that** the core puller (12) comprises one or more projections, which define the helix and separate different, mutually adjoining windings of the helix of the cast body from one another.

3. The casting mold according to claim 1 or 2, **characterized in that** the core puller moves in at least one or two directions during demolding.

4. The casting mold according to claim 1 or 2, **characterized in that** the core puller rotates during demolding.

5. The casting mold according to claim 1 or 2, **characterized in that** the core puller is made of a ceramic material, in particular a foundry sand material, which can be dissolved after a casting process.

6. A casting mold according to any one of claims 1 to 5, **characterized in that** the die (10) comprises one or more projections (10c, 10d), which define the helix and separate different, mutually adjoining windings (3, 4, 5) of the helix of the cast body (1) from one another.

7. The casting mold according to claim 6, **characterized in that** the die (10) has a multi-piece design and is configured such that multiple parts of the die are removed from one another after each casting process for demolding.

8. A casting mold according to any one of claims 1 to 7, **characterized in that** the die (10) and/or a mold core (12) are entirely or partially made of titanium nitride, titanium carbonitride, silicon carbide, silicon nitride or aluminum oxide.

## Revendications

1. Moule de coulée permettant de produire des corps de coulée hélicoïdaux (1), en particulier des bobines, des ressorts ou des spirales, comprenant une matrice (10), sous la forme d'un moule permanent, définissant le contour extérieur des corps hélicoïdaux et constituée d'un matériau céramique ou revêtue d'un matériau céramique, un outil de support (8) supportant la matrice (10) depuis l'extérieur, et un noyau de moule définissant l'orifice traversant à l'intérieur du corps hélicoïdal (1), dans lequel le noyau de moule est réalisé sous la forme d'un extracteur de noyau (12), dans lequel le noyau de moule comprend au moins un sous-corps soluble ou destructible sous la forme d'un corps de support (12f) et plusieurs sous-corps non solubles (12a, 12b, 12c) pouvant être utilisés comme moule permanent,
dans lequel les sous-corps (12a, 12b, 12c) utilisables comme moule permanent sont constitués d'un matériau céramique ou sont revêtus d'un matériau céramique,
dans lequel, pendant l'opération de coulée, les sous-corps (12a, 12b, 12c) sont supportés par le corps de support (12f) dans une cavité centrale (12e) formée entre eux, dans lequel le corps de support (12f) est conçu pour pouvoir être détruit en tant que corps éliminable afin de permettre la chute de l'extracteur de noyau (12),
dans lequel le noyau de moule est réalisé de telle manière que seuls les sous-corps utilisables par lui comme moule permanent entrent en contact avec un matériau de coulée ou une masse fondue.

2. Moule de coulée selon la revendication 1, **caractérisé en ce que** l'extracteur de noyau (12) présente une ou plusieurs nervure(s) qui défini(ssen)t l'hélice et séparent les unes des autres différentes spires, adjacentes les unes aux autres, de l'hélice du corps de coulée.

3. Moule de coulée selon la revendication 1 ou 2, **caractérisé en ce que** l'extracteur de noyau tombe dans au moins une ou deux direction(s) lors du démoulage.

4. Moule de coulée selon la revendication 1 ou 2, **caractérisé en ce que** l'extracteur de noyau tourne lors du démoulage.

5. Moule de coulée selon la revendication 1 ou 2, **caractérisé en ce que** l'extracteur de noyau est constitué d'un matériau céramique, en particulier d'un matériau à base de sable de moulage, qui peut être éliminer après une opération de coulée.

6. Moule de coulée selon l'une quelconque des revendications 1 à 5, **caractérisé en ce que** la matrice (10) présente une ou plusieurs nervure(s) (10c, 10d) qui défini(ssen)t l'hélice et séparent les unes des autres différentes spires (3, 4, 5), adjacentes les unes aux autres, de l'hélice du corps de coulée (1).

7. Moule de coulée selon la revendication 6, **caractérisé en ce que** la matrice (10) est réalisée en plusieurs parties et est conçue à cet effet et **en ce qu'**après chaque opération de coulée plusieurs parties de la matrice sont éloignées les unes des autres en vue du démoulage.

8. Moule de coulée selon l'une quelconque des revendications 1 à 7, **caractérisé en ce que** la matrice (10) et/ou un noyau de moule (12) est/sont constitué(s) en totalité ou en partie de nitrure de titane, de carbonitrure de titane, de carbure de silicium, de nitrure de silicium ou d'oxyde d'aluminium.
